Europäisches Patentamt

European Patent Office

Office européen des brevets

(11) Publication number: 0 508 508 A1

# EUROPEAN PATENT APPLICATION

(21) Application number: 92200699.4

(22) Date of filing: 10.03.92

(51) Int. Cl.5: F02B 29/02, F02M 35/10

(30) Priority: 08.04.91 US 681593
08.04.91 US 681596

(43) Date of publication of application:
14.10.92 Bulletin 92/42

(84) Designated Contracting States:
DE FR GB IT

(71) Applicant: GENERAL MOTORS CORPORATION
General Motors Building 3044 West Grand
Boulevard
Detroit Michigan 48202(US)

(72) Inventor: Lee, Jordan Ross
11208 Forrer Drive
Sterling Heights, Michigan 48312(US)
Inventor: MacFarlane, Glen Raymond
6469 Ridgewood
Clarkston, Michigan 48346(US)
Inventor: Davis, Richard Stephen
11995 Kaeding
Romeo, Michigan 48065(US)

(74) Representative: Denton, Michael John et al
Patent Section 1st Floor Gideon House 28
Chapel Street
Luton Bedfordshire LU1 2SE(GB)

(54) Air supply system for an engine.

(57) An intermittent bypass system comprises an intake passage (22) leading to a cylinder (14) in an engine and an intake controller (10) connected to the intake passage (22) adjacent to the cylinder (14). The intake controller (10) enables, during different portions of the engine cycle, fluid flow from the intake passage (22) into the cylinder (14), fluid back-flow from the cylinder into the intake passage (22), and obstruction of fluid flow between the intake passage (22) and the cylinder (14). A check valve (24) is located in the intake passage (22) upstream of the intake controller (10) with the check valve (24) allowing fluid flow toward the cylinder (14) and obstructing fluid back-flow in the reverse direction. A bypass port (26) is located on the intake passage (22) to provide a flow path to a downstream portion (28) defined by the portion of the intake passage (22) between the check valve (24) and intake controller (10). A control valve (38) is connected between a secondary fluid source (36) and the bypass port (26) enabling communication between the secondary fluid source (36) and downstream portion (28) during a portion of the engine cycle when the pressure in the downstream portion (28) is less than the pressure in the secondary fluid source (36). The control valve (38) obstructs the communication during a portion of the engine cycle when the pressure in the downstream portion (28) is greater than the pressure in the secondary fluid source (36).

Rank Xerox (UK) Business Services

FIG.1

This invention relates to an air supply system for an engine, which can include a bypass system for a check valve located in an intake passage leading to a cylinder of an engine, the intermittent bypass system including a control valve means enabling communication between a secondary fluid source and the intake passage downstream of the check valve during a predetermined portion of the engine cycle.

A check valve can be located in an intake passage leading to a cylinder in an engine to obstruct back-flow of fluid out of the cylinder into the intake passage. In such an arrangement, a downstream portion is defined by the portion of the intake passage between the check valve and cylinder.

A secondary passage can be connected to a bypass port formed on the intake passage between the check valve and cylinder to allow communication between the downstream portion and a secondary fluid source. Such communication can improve engine performance if properly controlled.

For example, such a secondary passage can enable a secondary air flow into the downstream portion. This can result in a reduction in the air flow which must pass through the check valve since a portion of the air flow can bypass the check valve and flow into the cylinder via the secondary passage and downstream portion. The reduction in pressure of the fluid flow caused by its passage through the check valve can therefore be reduced since the pressure reduction is proportional to the quantity of fluid flow through the check valve.

Reducing the fluid flow through the check valve can also result in a reduction in the required size of the check valve. A reduction in the check valve size can result in improved durability and frequency response of the check valve. Also, a reduction in the check valve size can reduce the space required in the engine to mount the check valve. This can allow the check valve to be mounted closer to the cylinder thereby reducing the size of the downstream portion.

Such a secondary passage can, however, allow a portion of the fluid which flows back into the downstream portion from the cylinder to bypass the check valve and exit the downstream portion via the secondary passage. The obstruction provided by the check valve to fluid flow from the cylinder back into the downstream portion is thereby limited.

The present invention seeks to provide an improved air supply system for an engine.

According to an aspect of the present invention, there is provided an air supply system for an internal combustion engine as specified in claim 1.

In an embodiment, there is provided an intermittent bypass system comprising an intake passage leading to a cylinder in an engine and an intake conduit including an intake control means connected to the intake passage adjacent to the cylinder. The intake control means enables, during different portions of the engine cycle, fluid flow from the intake passage into the cylinder, fluid back-flow from the cylinder into the intake passage, and obstruction of fluid flow between the intake passage and the cylinder. A check valve is located in the intake passage upstream of the intake control means with the check valve allowing fluid flow toward the cylinder and obstructing fluid back-flow in the reverse direction. A bypass port is located on the intake passage to provide a flow path to a downstream portion defined by the portion of the intake passage between the check valve and intake control means.

The intermittent bypass system of this embodiment further comprises a control valve means connected between a secondary fluid source and the bypass port. The secondary fluid source comprises a portion of the intake conduit upstream of the check valve. The control valve means enables communication between the secondary fluid source and downstream portion during a portion of the engine cycle when the check valve is open. The control valve means obstructs the communication during a portion of the engine cycle when the check valve is closed.

The ability of the control valve means of this embodiment to allow and obstruct the communication during predetermined portions of the engine cycle can result in a number of improvements in engine performance. For example, if the communication is allowed when the pressure in the secondary fluid source is greater than the pressure in the downstream portion, a secondary fluid flow can be provided via the control valve means to the downstream portion. Reductions in the size of the check valve and in the pressure drop produced by the check valve can therefore be realized. If the communication between the downstream portion and secondary fluid source is obstructed when fluid is flowing from the cylinder back into the downstream portion, loss of fluid from the downstream portion through the secondary passage can be reduced.

An embodiment of the present invention is described below, by way of illustration only, with reference to the accompanying drawing, in which:

Figure 1 is a schematic view showing an embodiment of intermittent bypass system connected to an engine; and

Figure 2 is a graph showing the state of some of the valves of the system of Figure 1 during an engine cycle.

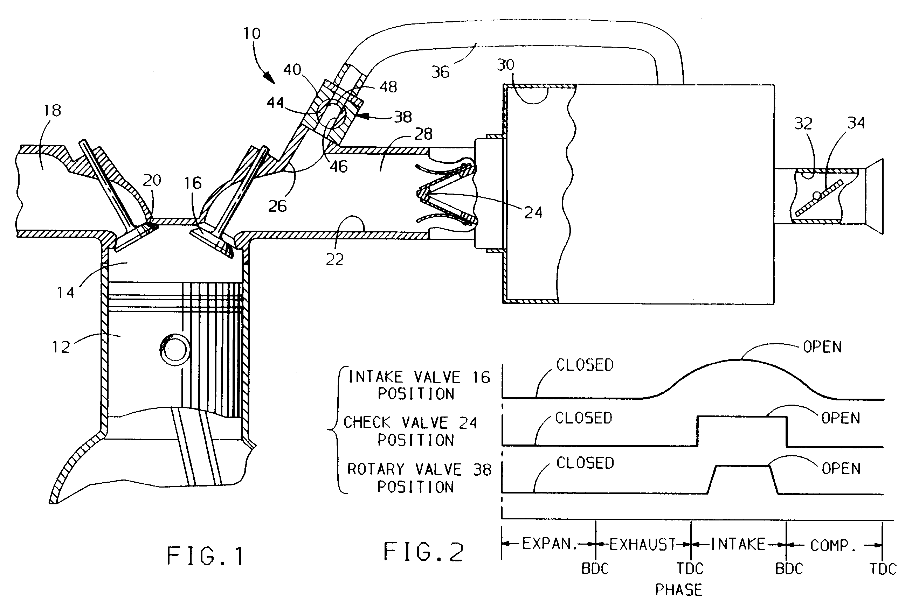

Referring to the drawing, and in particular Figure 1, an intermittent bypass system 10 is connected to an engine, which may be a four-stroke, two-stroke, Diesel, rotary valve or rotary engine.

The intermittent bypass system 10 comprises an intake conduit including an intake passage 22 leading to a cylinder 14 in the engine. An exhaust passage 18 leads away from the cylinder. A piston 12 is disposed in the cylinder. A check valve 24, such as a reed valve, is located in the intake passage 22. The check valve 24 allows fluid flow towards the cylinder 14 and obstructs fluid backflow in the reverse direction.

The intermittent bypass system 10 further comprises an intake control assembly including an intake valve 16 seated in the intake passage 22 adjacent to cylinder 14. The intake valve 16 may comprise a poppet valve, as shown in Figure 1, or a rotary valve. The intake control assembly may alternatively comprise a port formed on the side of the cylinder 14 which is connected to the intake passage 22. Such a port would be located on the cylinder 14 so that it is covered and uncovered by the reciprocating motion of the piston 12 in the cylinder 14 thereby providing control of the fluid flow into the cylinder, and providing an alternative to the intake valve 16 (as is common with, for example, two-stroke engines).

A bypass port 26 is located on the intake passage 22 to provide a flow path to a downstream portion 28 formed by the portion of the intake passage between the check valve 24 and intake valve 16.

The intake conduit includes a plenum 30 connected to the inlet of the intake passage 22 and to a throttle passage 32. The end of the throttle passage 32 opposite the plenum 30 leads to ambient air.

A throttle valve 34 is located in the throttle passage 32. The throttle valve 34 can be located elsewhere, such as in a portion of the downstream portion 28, downstream of the connection of the secondary passage 36 thereto, between the valve 16 and the bypass port 26. The intermittent bypass system 10 may also be used with an engine which lacks a throttle valve 34.

The secondary passage 36 has one end connected to the bypass port 26 and the other end connected to a secondary fluid source comprising the plenum 30. The secondary passage 36 thereby enables communication between the plenum 30 and downstream portion 28. This allows air to flow from the plenum 30 through the secondary passage 36 and downstream portion 28 into the cylinder 14, thereby bypassing the check valve 24.

The other end of the secondary passage 36 can alternatively be connected to the throttle passage 32 adjacent its inlet, in which the pressure is approximately atmospheric. The secondary fluid source would then include the portion of the throttle passage 32 adjacent to the secondary passage 36.

In such a construction, the throttle valve 34 is located in the throttle passage 32 downstream of the connection of the secondary passage 36 thereto. The throttle valve 34 can also be located adjacent to the connection of the secondary passage 36 to the throttle passage 32 so that the throttle valve can regulate the communication between the secondary passage and throttle passage, thereby controlling the pressure in the portion of the throttle passage with which the secondary passage communicates. The other end of the secondary passage 36 can also be connected to the intake passage 22 upstream of the check valve 24.

A control valve assembly, comprising a rotary valve 38, is connected to the secondary passage 36. The rotary valve 38 includes a rotor housing 40 interposed in the secondary passage 36 so that a portion of the secondary passage coincides with the interior of the rotor housing 40. The rotor housing 40 can be connected at any position along the length of the secondary passage 36.

The rotary valve 38 further includes a rotor 44 in the rotor housing 40. The rotor 44 has a rotor passage 46 which aligns with the secondary passage 36 during a part of a revolution of the rotor, thereby to enable communication between the plenum 30 and the downstream portion 28 (i.e., to open the rotary valve 38). During another part of the revolution of the rotor 44, the rotor obstructs the secondary passage 36 (i.e., to close the rotary valve 38).

The intermittent bypass system 10 preferably includes a valve controller which enables adjustment of the phasing of the opening of the rotary valve 38 (i.e., the part of the engine cycle during which the rotary valve is open), and adjustment of the duration of the opening of the rotary valve (i.e., the length of the part of the engine cycle during which the rotary valve is open). A mechanism for adjusting the phasing and duration of the opening of a rotary valve 38 is disclosed in U.S. patent application No 681,596 entitled "Rotary Valve and System for Duration and Phase Control". A suitable valve controller can be envisaged by a skilled person.

The secondary passage 36 can include a throttle valve to control the pressure of the fluid entering into the downstream portion 28 from the secondary passage. Such a throttle valve would be desirable if the secondary fluid source were constituted by the portion of the throttle passage 32 upstream of the throttle valve 34 or by a source not connected to the throttle passage.

The operation of the intermittent bypass system 10 is illustrated when used with a four-stroke engine. The four-stroke engine cycle, shown in Figure 2, comprises (i) an intake phase during which the piston 12 moves from top-dead-centre (TDC) to bottom-dead-centre (BDC) enabling air to flow from the downstream portion 28 into the cylinder 14, (ii) a compression phase during which the piston moves from BDC to TDC thereby compressing the gas in the cylinder, and during which the gas in the cylinder is normally ignited, (iii) an expansion phase during which the gas in the cylinder expands causing the piston to move from TDC to BDC, and (iv) an exhaust phase during which the piston moves from BDC to TDC enabling exhaust gas to flow out of the cylinder.

Communication between the cylinder 14 and downstream portion 28 is regulated by the intake valve 16, although such communication can be regulated by means other than an intake valve. For example, the communication can be regulated by the piston 12 covering and uncovering the intake passage 22 as in a typical two-stroke engine. Also, it is possible to use the intermittent bypass system 10 with engine cycles other than a four-stroke, such as a two-stroke engine cycle.

The intake valve 16 preferably opens during the exhaust phase. During this phase, the exhaust valve 20 is typically open allowing gas in the cylinder 14 to flow into the exhaust passage 18. Since the pressure in the exhaust passage 18 is ordinarily greater than atmospheric, exhaust gas can flow from the exhaust passage through the cylinder 14 into the intake passage 22 when the exhaust and intake valves 20,16 are open simultaneously. If the pressure in the cylinder 14 exceeds the pressure in the downstream portion 28, then gas in the cylinder can also flow back into the downstream portion 28. Gas flow from the downstream portion 28 into the cylinder 14 begins when the pressure in the downstream portion exceeds the cylinder pressure. The intake valve 16 remains open during the intake phase allowing gas from the downstream portion 28 to flow into the cylinder 14.

The intake valve 16 preferably remains open during a portion of the compression phase. As long as the pressure in the downstream portion 28 is larger than the pressure in the cylinder 14, gas continues to flow into the cylinder from the downstream portion. If the pressure in the cylinder 14 becomes larger than the pressure in the downstream portion 28, as can occur during the compression phase, then gas can flow from the cylinder back into the downstream portion. After the intake valve 16 closes, the gas inside the cylinder 14 is compressed during the remainder of the compression phase.

The rotation of the rotor 44, indicated by the arrow 48, is timed with respect to the engine cycle so that the rotor passage 46 becomes aligned with the secondary passage 36 to allow flow through the secondary passage 36 during the portion of the engine cycle when the pressure in the downstream portion 28 is less than the pressure in the secondary fluid source (i.e., the plenum 30). This allows air to flow from the plenum 30 through the secondary passage 36 into the downstream portion 28 to supplement the air flowing through the check valve 24 into the downstream portion. The rotor 44 may be rotatably coupled to a camshaft, which controls the opening of the intake valve 16, so that the opening of the rotary valve 38, with respect to the opening of the intake valve, is not affected by changes in the engine operating speed.

For the embodiment shown in Figure 1, when the pressure in the plenum 30 is larger than the pressure in the downstream portion 28, there will also be air flow through the check valve 24 into the downstream portion 28. Thus, the rotation of the rotor 44 is timed so that the rotary valve 38 opens after the check valve 24 opens and closes before the check valve closes, as shown in Figure 2.

The rotary valve 38 obstructs the secondary passage 36 during the portions of the engine cycle when the pressure in the plenum 30 is not greater than the pressure in the downstream portion 28. This prevents fluid flow from the downstream portion 28, via the secondary passage 36, back into the plenum 30. Such flow can be substantial if the pressure in the downstream portion 28 is substantially larger than the pressure in the plenum 30. A large pressure can occur in the downstream portion 28 during parts of the exhaust and compression portions of the engine cycle when the intake valve 16 is open. Flow from the downstream portion 28 through the secondary passage 36 to the plenum 30 bypasses the check valve 24 thereby limiting its effectiveness in reducing fluid back-flow.

The portion of the engine cycle during which the pressure in the plenum 30 is larger than the pressure in the downstream portion 28 can vary depending on the engine speed and load. It may therefore be preferable to vary the portion of the engine cycle when the rotary valve 38 allows communication between the downstream portion 28 and plenum 30, via the secondary passage 36, so that the secondary passage is open during the entire period when the pressure in the plenum 30 is larger than the pressure in the downstream portion 28, and is obstructed during the remaining portions of the engine cycle. Adjustment of the phasing and duration of the communication via the secondary passage 36 can be made by a valve controller (described above with reference to U.S. patent application no. 681,596) which enables control of the phasing and duration of the opening of the rotary valve 38.

Communication between the downstream portion 28 and plenum 30, via the secondary passage 36, during portions of the engine cycle when the pressure in the downstream portion is larger than the plenum pressure is also possible. Such communication can be enabled by a valve controller which allows adjustment of the phasing and duration of the opening of the rotary valve 38. Communication during these portions of the engine cycle results in a reduced pressure in the downstream portion 28 and, depending on the portion of the engine cycle during which the intake and exhaust valves 16, 20 are open, can result in increased fluid back-flow from the cylinder 14 into the downstream portion 28.

For example, if the intake valve 16 opens during the exhaust phase when the exhaust valve 20 is open, and the pressure in the downstream portion 28 is sufficiently reduced, then exhaust gas can flow from the cylinder 14 back into the downstream portion 28 instead of being exhausted into the exhaust passage 18. Such exhaust gas ordinarily reenters the cylinder 14 during the next intake phase. Under some engine operating conditions, adding exhaust gas to the fuel and air in the cylinder 14 can improve the combustion therein.

It is also possible to use the intermittent bypass system 10 to control the air flow to the cylinder 14 during low engine operating speeds and loads. This can be accomplished by connecting the secondary passage 36 to the throttle passage 32 either upstream of or adjacent to the throttle valve 34. During low engine operating speeds and loads, the throttle valve 34 is closed to obstruct substantially all of the air flow into the cylinder 14 via the check valve 24 so that substantially all of the air is supplied to the cylinder via the secondary passage 36. The air flow through the secondary passage 36 is controlled by the rotary valve 38. If the secondary passage 36 is connected to the throttle passage 32 adjacent to the throttle valve 34, then the air flow through the secondary passage can be further controlled by adjusting the throttle valve 34 to vary the pressure in the portion of the throttle passage with which the secondary passage communicates.

It is also possible to control the pressure in the downstream portion 28 when the intake valve 16 is closed using the intermittent bypass system 10, in a manner similar to that described in U.S. patent no. 4991547, the disclosure of which is hereby incorporated by reference. The rotation of the rotor 44, indicated by the arrow 48, is timed with respect to the engine cycle so that the rotor passage 46 becomes aligned with the secondary passage 36 during the portion of the engine cycle when the intake valve 16 is closed.

## Claims

1. An air supply system for an internal combustion engine comprising an intake conduit including an intake passage (22) leading to a cylinder (14) of an engine; intake control means (16) connected to the intake passage adjacent to the cylinder and adapted, during different portions of a single engine cycle, to enable fluid flow from the intake passage into the cylinder and fluid back-flow from the cylinder into the intake passage, and to obstruct fluid flow between the intake passage and the cylinder; a check valve (24) coupled to the intake passage and adapted, during a portion of a single engine cycle, to open so as to allow fluid flow through the intake passage towards the cylinder and to close when there is no fluid flow through the check valve towards the cylinder so as to obstruct fluid back-flow into the intake passage, thereby enabling the pressure in the intake passage between the check valve and the cylinder to become larger than the pressure in the intake conduit; a bypass port (26) coupled to the intake passage (22) to provide a flow path to a first portion (28) of the intake passage disposed between the valve and the intake control means; a secondary fluid source (36) coupled to the intake conduit; and a control valve (38) coupled between the secondary fluid source and the bypass port and adapted to operate in synchronism with the engine to enable communication between the secondary fluid source and the first portion of the intake passage when the check valve is open and to obstruct communication between the secondary fluid source and the first portion of the intake passage when the check valve is closed.

2. An air supply system according to claim 1, wherein the control valve (38) comprises a secondary passage (36) connected between the secondary fluid source and the bypass port; and a rotary valve (38) including a rotor (44) disposed between the secondary passage and the bypass port and comprising a rotor passage (46) therein adapted, on rotation of the rotor, to become aligned with the secondary passage in a first part of a revolution of the rotor so as to allow communication between the secondary passage and the intake passage, and to obstruct communication between the secondary passage and the intake passage in another part of a revolution of the rotor.

3. An air supply system according to claim 2, wherein the first part of a revolution of the rotor (44) is adapted substantially to coincide with a portion of a single engine cycle during which the pressure in the secondary fluid source is greater than the pressure in the first portion (28) of the intake passage, the pressure in the first portion of the intake passage is greater than the pressure in the engine cylinder, and fluid flow from the intake passage into the cylinder has been enabled by the intake control means (16); the rotor (44) being adapted to obstruct communication between the secondary passage and the intake passage during the remaining portions of the single engine cycle.

4. An air supply system according to claim 1, 2 or 3, wherein the secondary fluid source is coupled to the intake conduit through a plenum.

5. An air supply system according to any preceding claim, wherein the control valve (38) is adapted to enable communication between the secondary fluid source and the intake passage when the intake control means (16) obstructs fluid flow between the intake passage and the cylinder.

FIG.1

FIG.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | PATENT ABSTRACTS OF JAPAN vol. 10, no. 304 (M-526)16 October 1986 & JP-A-61 116 028 ( SUZUKI MOTOR CO LTD ) 3 June 1986 | 1 | F02B29/02 F02M35/10 |
| Y | * abstract * | 2-4 | |
| X | PATENT ABSTRACTS OF JAPAN vol. 8, no. 120 (M-300)6 June 1984 & JP-A-59 025 033 ( HONDA GIKEN KOGYO KK ) 8 February 1984 * abstract * | 1 | |
| Y | PATENT ABSTRACTS OF JAPAN vol. 7, no. 016 (M-187)22 January  1983 & JP-A-57 173 526 ( TOYO KOGYO KK ) 25 October 1982 * abstract * | 2,3 | |
| D,Y | US-A-4 991 547 (DAVIS ET AL.) * column 1, line 60 - column 2, line 68; figure 1 * | 4 | TECHNICAL FIELDS SEARCHED (Int. Cl.5 ) |
| A | US-A-4 475 510 (ASAKA ET AL.) * abstract; figures 1,3 * | 1 | F02B F02M |
| A | PATENT ABSTRACTS OF JAPAN vol. 12, no. 332 (M-738)8 September 1988 & JP-A-63 094 027 ( MAZDA MOTOR CORP ) 25 April 1988 * abstract * | 1 | |

The present search report has been drawn up for all claims

| Place of search | Date of completion of the search | Examiner |
|---|---|---|
| THE HAGUE | 26 JUNE 1992 | ALCONCHEL Y UNGRIA J |